# EUROPÄISCHE PATENTANMELDUNG

(11) **EP 0 671 528 A1**
(43) Veröffentlichungstag der Anmeldung: **13.09.1995**
(21) Anmeldenummer: 95101106.3
(22) Anmeldetag: 27.01.1995
(51) Int. Cl.: E05B 49/00, G07C 9/00

(54) **Elektronisches Code-Schloss, insbesondere zum Deaktivieren einer Kraftfahrzeug-Wegfahrsperre**

(30) Priorität: 10.03.1994 DE 4407966
(71) Anmelder: Valeo Borg Instruments Verwaltung GmbH, 75196 Remchingen (DE)
(72) Erfinder: Cremers, Rolf Dr., D-76359 Marxzell (DE); Ziegler, Wolfgang Dr., D-76307 Karlsbad (DE)
(74) Vertreter: COHAUSZ HASE DAWIDOWICZ & PARTNER

(57) **Zusammenfassung**

Ein gegen Abhör-Mißbrauch gesichertes aber in der Erstausstattung wie in der Ersatzbeschaffung und hinsichtlich Notfunktionen flexibles elektronische Code-Schloß (11) mit drahtloser Informationsübertragung zwischen Schlüssel (13) und Objekt-Schloß (11) ergibt sich, wenn der aktuell vom Schloß (11) abgerufene Schlüsselcode (34) mittels eines Hardware-Verschlüsselers (38) kryptographisch jeweils codiert wird. Bei Inbetriebnahme dieses Schlosses (11) wird von einem Kontrollelement (26), das gleichzeitig mit einem neuen Schlüssel (13) induktiv an die Schreib-Lese-Einheit (25) des Schlosses (19) koppelbar ist, eine Identnummer (36) einmalig und nicht überschreibbar in den Objekt-Speicher (29) übertragen, und außerdem werden objektspezifische Identitätsdaten (30) in das Kontrollelement (26) eingespeichert. Mit letzteren wird eine aus einem Schlüsselregister (33) des Kontrollelements (26) abrufbare Schlüsselnummer zum Schlüsselcode (34) kombiniert, um diesen zusammen mit einem rollierenden (Pseudo-)Zufallscode (37) in den Satz von zunächst noch neutralen Schlüsseln (13) und in den Objekt-Speicher (29) einzulesen. So ist ein Schlüssel (13) nur gültig, wenn in seinem Schlüsselcode (34) die objektspezifischen Identitätsdaten (30) berücksichtigt sind, was aber nur mittels Programmierung über ein scheckkartenähnliches Kontrollelement (26) möglich ist, welches als einziges gültiges Exemplar dem spezifischen Objekt nach der Inbetriebnahme des Schlosses (11) oder bei einem Komponenten-Ersatz einmal fest zugeordnet wurde.

## Beschreibung

Die Erfindung betrifft ein elektronisches Code-Schloss gemäß dem Oberbegriff des Anspruches 1.

Bei dem in dem Beitrag "Programmierbar ohne Computer" (Seite 6 der Verbandszeltschrift "interkey-sicher" Nr. 13/1993) beschriebenen elektronischen Türschloß befindet sich an der Spitze des Schlüssel-Schaftes eine induktiv mit einem Schloß-Speicher koppelbarer Speicherchip. Der Schloß-Speicher wird einmal mittels eines Kontrollelementes in Form eines speziellen Programmierschlüssels auf dessen Schlüsselcode gesetzt, welcher auch im zugeordneten (Benutzer-)Schlüssel abgespeichert ist. In gleicher Weise kann mittels eines Lösch-Schlüssels die Information wieder aus dem Schloß-Speicher getilgt werden, um diesen danach einem anderen Schlüssel-Code zuzuordnen. Allerdings ist der so erzielbare Sicherheitsstandard immer noch vergleichbar gering. Denn eine drahtlose Informationsübertragung ist grundsätzlich mittels eines externen Empfangselementes abhörbar, so daß sich der Schlüssel durch drahtloses Wieder-Einspeisen des abgehörten Schlüsselcodes simulieren läßt. Auch stellt die freie Verwendbarkeit des Programmierschlüssels zum Einrichten einer beliebigen Anzahl von beliebigen Schloß-Speichern mangels objektspezifischer Kontrollfunktionen ein hohes Sicherheitsrisiko dar. Vor allem aber besteht das logistische Problem der Ersatzbeschaffung nach Verlust oder unautorisierter Kopie des dem Programmschlüssel fest zugeordneten (Benutzer-)Schlüssels.

In Erkenntnis dieser Gegebenheiten liegt vorliegender Erfindung deshalb die technische Problematik zugrunde, bei einem elektronischen Code-Schloß gattungsgemäßer Art solche logistischen Probleme sowie die Manipulationsmöglichkeiten auszuschalten oder jedenfalls drastisch einzuschränken.

Diese Aufgabe ist erfindungsgemäß im wesentlichen dadurch gelöst, daß bei dem gattungsgemäßen Code-Schloß auch die kennzeichnenden Merkmale des Haupanspruches realisiert werden.

Nach dieser Lösung ist eine Schlüsselzuordnung nur unter Objektzuordnung des Kontrollelements möglich und bleibt dann stets mit dieser verknüpft.

Bei dem Objekt handelt es sich vorzugsweise um ein Kraftfahrzeug, dessen zur Diebstahlssicherung im abgestellten Zustand wirksame Wegfahrsperre nur mittels eines an sich herkömmlichen Zündschlüssels deaktiviert werden kann, in dessen Griffbereich aber zusätzlich ein Schlüsselcode-Speicher mit Transponder untergebracht ist, der mit einer Schreib-Lese-Einheit an dem oder in der näheren Umgebung von dem Schloß kommunizieren kann. Dazu wird von dem Schloß-Transponder Energie, vorzugsweise im Bereich des Überganges zwischen dem Langwellen- und dem Mittelwellen-Rundfunkband des elektromagnetischen Strahlungsspektrums, vom Schloß-Transponder an den Schlüssel-Transponder induktiv übertragen, um dort die Lese- (und ggf. auch eine Schreib-)Schaltung für den Schlüssel-Speicher zum Informationsabruf zu aktivieren, wie es als solches etwa aus der Technologie der induktiv betreibbaren Transponder bekannt und in dem Beitrag von R. Jurisch "Identifikation: Kontaktlos via Hochfrequenz" in Elektronik Heft 9/1993 Seiten 86ff näher beschrieben ist. Bei dem Objekt kann es sich aber auch um stationäre Einrichtungen handeln, die nur mittels eines allein dem Berechtigten verfügbaren Schlüsselcodes zugänglich oder unzugänglich gemacht werden sollen.

Problematisch bei der Realisierung herkömmlicher Codeschlüssel-Systeme ist außer dem in der gattungsbildenden Vorveröffentlichung beschriebenen Programmieraufwand vor allem der Logistik-Engpaß, der bei Schloßtausch oder Schlüsselverlust - verglichen mit herkömmlichen mechanischen Schlössern - auftritt. Dieser Engpaß, ebenso wie das Sicherheitsrisiko einer abhörgefährdeten offenen Datenübertragung und die Problematik der Schlüssel-Objekt-Zuordnung, sind nun aber durch die erfindungsgemäße Lösung überwunden, die keines zusätzlichen logistischen Aufwandes (verglichen mit bestehenden rein mechanischen Schließsystemen) mehr bedarf und den befugten Besitzer des Schlüssel in den Stand versetzt, alle wesentlichen, möglicherweise im täglichen Leben auftretenden Probleme in herkömmlicher Weise selbst zu lösen, ohne daß die Sicherheits-Funktionkette des Systemes an irgendeiner Stelle unterbrochen wird oder umgangen werden kann.

Das wird bewirkt durch eine Datenvermittlung vermittels der dem Schloß zugeordneten Schreib-Lese-Einheit in ihrer intelligenten Kopplungsfunktion zwischen einerseits den Schlüssel- oder dem Kontroll-Transponder und andererseits dem Objektspeicher. Vorsorglich wird jeder drahtlose Datenaustausch kryptographisch verschlüsselt, um unautorisiert empfangene Daten später nicht mehr verwenden zu können. Da nach erstmaliger Objekt-Installation bei Schlüsseln mit Lese-Schreib-Transpondern und -Speichern alle maßgeblichen Informationen für die Erzeugung zulässiger Schlüsselcodes in einem Kontrollelement abgelegt sind, das dem autorisierten Benutzer wie etwa ein Kraftfahrzeugbrief zur Verfügung steht, kann - und nur er - damit bedarfsweise (beispielsweise nach Schlüssel-Verlust) Ersatzschlüssel in beschränkter Anzahl funktionstüchtig machen, bis ihm der Schloß-Hersteller bzw. der Einrichter des Objekts wieder ein frisches (und dann einzig brauchbares) Kontrollelement zur Verfügung stellt. Auch kann mittels dieses Kontrollelementes oder durch seinen Austausch der komplette Satz bisher zulässiger Schlüssel ungültig gemacht werden, was einen wesentlichen Sicherheitsaspekt nach Verlust- oder Diebstahls-Verdacht darstellt. Zugang in die Sicherheitskette hat und behält allein der Inhaber des stets einzig gültigen Kontrollelementes, so daß auch nicht etwa über Werkstätten diese Sicherheitskette unautorisiert umgangen oder überwunden werden kann.

Ein bei der Schreib-Lese-Einheit des Schlosses hardwaremäßig realisierter Kryptographie-Algorythmus bewirkt bei jeder Schlüssel-Benutzung eine Code-Änderung, so daß ein einmal unautorisiert abgehörtes Übertragungsprotokoll später nicht mehr nutzbar ist. Bei Ausstattung des Schlüssels mit Schreib-Lese-Transponder und -Speicher ist als zusätzliche Sicherung ein rollierender (Pseudo-)Zufallscode nach jeder Schlüssel-Benutzung neu in dessen Speicher und in den Schloß-Speicher eingebbar.

Umcodierungen von Schlüsseln sind nur möglich, wenn die Schreib-Lese-Einheit außer einem Schlüssel-Transponder gleichzeitig auch den durch eine gesonderte Objekt-Kennung autorisierten Kontrollelement-Transponder erfaßt.

In der objektfesten Schreib-Lese-Einheit des Schlosses sind die Sender- und Empfänger-Funktionen für den Transponder-Datenaustausch sowie der hardwaremäßige Kryptographiealgorythmus und ggf. ein Mikroprozessor für die Funktion der Kontrollelektronik in einer integrierten Schaltung realisiert, an die außer der externen Sende-Empfangs-Spule (Transponder-Antenne) der Schloß- oder Objekt-Speicher extern angeschlossen sein kann. Die von der Schreib-Lese-Einheit gespeiste Kontrollelektronik ist dafür ausgelegt, nicht nur empfangene mit abgespeicherten Daten auf Übereinstimmung vergleichen zu können, sondern auch festzustellen, ob ein Transponder-Speicher bereits einmal mit einer Information belegt wurde, oder aber neu eingesetzt wird und deshalb zunächst noch mit objektspezifischen Sicherheitsdaten zu speisen ist.

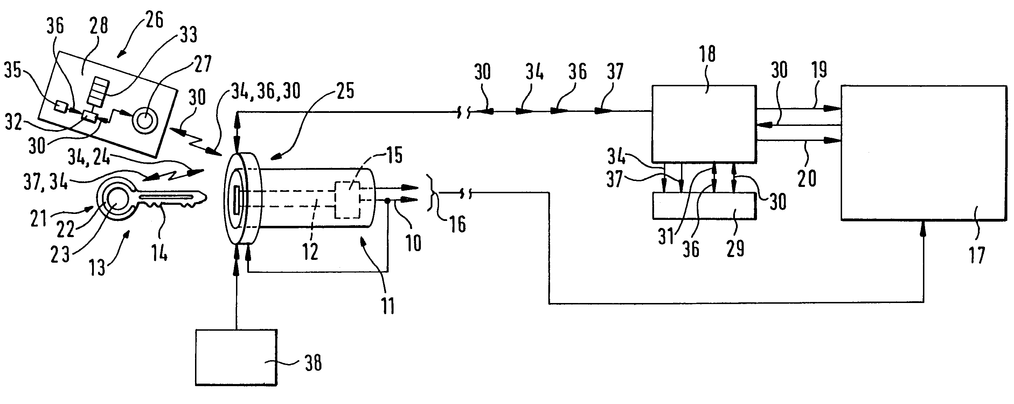

Zusätzliche Weiterbildungen und Alternativen sowie weitere Merkmale und Vorteile der Erfindung ergeben sich aus den weiteren Ansprüchen und, auch unter Berücksichtigung der Darlegungen in der abschließenden Zusammenfassung, aus nachstehender Beschreibung eines in der Zeichnung unter Beschränkung auf das Wesentliche als einpoliges Blockschaltbild stark abstrahiert skizzierten bevorzugten Funktionsbeispieles zur erfindungsgemäßen Lösung. Die einzige Figur der Zeichnung zeigt die über die objektspezifische Schreib-Lese-Einheit miteinander kommunizierenden Speicher im Kontrollelement, im Schlüssel und beim Schloß.

Das in der Zeichnung skizzierte elektronische Code-Schloß 11 ist für dieses bevorzugte Realisierungs-Beispiel als gängiger Schließzylinder 12 für einen Schlüssel 13 mit Sperrwellenprofil 14 auf seinem Schaft dargestellt. Ein angebauter Schloßschalter 15 liefert je nach der aktuellen Schlüssel-Drehstellung gleichzeitig und/oder nacheinander Steuerungsinformationen 16 (Signal- oder Leistungspegel) an wenigstens ein Stellglied 17. Bei diesem kann es sich um einen Teil der Motorelektrik eines Kraftfahrzeugantriebs, aber auch etwa um eine Freigabesteuerung für Drehkreuze, selbsverriegelnde Türen oder sonstige Funktions- oder Kontrolleinrichtungen handeln. Diese Stellglieder 17 werden allerdings nur aktiv, bzw. sie sind nur dann betätigbar, wenn eine Kontrollelektronik 18 ein Freigabesignal 19 liefert. Andernfalls - insbesondere dann, wenn die Kontrollelektronik 18 ein Sperrsignal 20 liefert -, ist die Funktion der Stellglieder 17 in der Sicherstellung blockiert. Bei der Sicherstellung handelt es sich je nach dem Einsatzfall des Code-Schlosses 11 etwa die in das Motor-Management eines Kraftfahrzeugs eingreifende Wegfahrsperre, um die Verriegelung einer Tür vor einer gegen Fremdzugriff zu schützenden (stationären oder mobilen) Räumlichkeit oder beispielsweise um die Freigabe der Panik-Entriegelung eines Notausganges.

Das Freigabesignal 19 soll deshalb nur erscheinen, wenn das Schloß 11 von einem autorisierten, also objektspezifisch zugeordneten Schlüssel 13 betätigt wird. Die Zuordnung kann jedenfalls in herkömmlicher Weise über das Sperrwellenprofil 14 definiert sein; insbesondere (und ggf. zusätzlich) ist diese Zuordnung gemäß vorliegender Erfindung jedoch dadurch definiert, daß der Schlüssel 13 beispielsweise in seinem nicht in den Schließzylinder 12 eintauchenden Griff 21 mit einem Transponder 22 zur drahtlosen Übertragung eines eingespeicherten Codes 24 an eine Schreib-Lese-Einheit 25 am Schloß 11 ausgestattet ist.

Die funktional zur Schreib-Lese-Einheit 25 gehörende Kontrollelektronik 18 ist im bevorzugten Einsatzfall als Kraftfahrzeug-Wegfahrsperre apparativ ein Teil der Motorelektronik. Die Schreib-Lese-Einheit 25 kann für diesen Einsatzfall bevorzugt in ein Informationssystem oder in die Zentralverriegelungselektronik des Fahrzeugs integriert sein.

Das Schloß 11 soll gewöhnlich mit einem Satz von mehreren (beispielsweise vier) gleichen Schlüsseln 13 betätigbar sein, die an Nutzungsberechtigte verteilt werden können. Zusätzlich zu den codierten Schlüsseln 13 ist dem individuellen Schloßspeicher 29 ein Kontrollelement 26 mit Transponder 27 zugeordnet. Das wird aber (im Gegensatz zum Schlüssel 13) nicht in das Schloß 11 eingeführt, sondern es braucht nur in die Nähe der Schreib-Lese-Einheit 25 dieses Schlosses 11 verbracht zu werden. Das Kontrollelement 26 kann deshalb beispielsweise als Anhänger, als Anstecker oder wie dargestellt bevorzugt nach Art einer Scheckkarte als Karte 28 ausgebildet sein, um als Trägerelement insbesondere für seinen Transponder 27 zu dienen. Der Abfrage-Algorithmus der Schreib-Lese-Einheit 25 ist dafür ausgelegt, quasi-gleichseitig den Schlüssel-Transponder 22 und den Kontroll-Transponder 27 erfassen zu können.

Bei Fertigstellung des Objektes, das mit dem Schloß 11 und der Kontrollelektronik 18 vor ihren Stellgliedern 17 ausgestattet ist (also etwa am Bandende einer Kraftfahrzeugfertigung oder nach Einbau einer Gebäudetür), werden in seinen nichtflüchtigen Speicher 29 objektspezifische Identitätsdaten 30 (wie Fahrgestellnummer oder Motornummer im Kraftfahrzeugbereich bzw. Auftragsnummer oder Objektnummer im Hochbaubereich) eingelesen und außerdem über die Kontrollelektronik 18 mittels der Schreib-Lese-Einheit 25 des Schlosses 11 beispielsweise induktiv über den Kontroll-Transponder 27 in einen nichtflüchtigen Speicher 32 des Kontrollelementes 26 übertragen. Solche auf die produktspezifischen bzw. ortsspezifischen Identifikationsdaten 30 programmierte Karte 28 kann damit künftig die Funktion eines Zugangsausweises bzw. eines Kraftfahrzeugbriefes übernehmen.

Außerdem ist in ein entsprechend vielstelliges Schlüsselregister 33 des Kontrollelementes 26 eine Anzahl von (beispielsweise maximal acht) binärcodierten Schlüsselcodes 34 von herstellerseitig damit schon ausgestatteten Schlüsseln 13 mittels der Schreib-Lese-Einheit 25 übertragbar oder herstellerseitig auf der Karte 28 schon fest eingespeichert.

In ersterem Falle brauchen die Schlüssel 13 nur mit einem Nur-Lese-Transponder 12 und flüchtigen Speicher 23 ausgestattet zu sein. Für die Zuordnung des Kontrollelements 26 wird einer aus dem aktuellen Satz der Schlüssel 13 ins Schloß 11 gesteckt und dessen Schlüsselcode 34 über die Schreib-Lese-Einheit 25 in die erste Position des Schlüsselregisters 33 sowie in den Schloß-Speicher 29 übertragen. Andernfalls wird über die Schreib-Lese-Einheit 25 eine der im Schlüsselregister 33 des Kontrollelementes 26 herstellerseitig verfügbar gemachten Schlüsselnummern in Kombination mit den soeben auf das Kontrollelement 26 übertragenen objektspezifischen Identitätsdaten 30 als Schlüsselcode 34 in den Speicher 23 des noch uncodierten Schlüssels 13 übertragen, wenn der Schaft dieses Schlüssels 13 den Schloßschalter 15 auf Betriebsbereitschaft eingeschaltet hat sofern und die Schreib-Lese-Einheit 25 bei der Abfrage des Schlüssel-Transponders 22 feststellt, daß in dessen Speicher 23 noch kein Schlüsselcode 34 eingeprägt worden war. So werden der Reihe nach alle mechanisch passenden aber codemäßig noch neutralen Schlüssel 13 dieses dem Schloß 11 zuzuordnenden Satzes auf den aus dem Kontrollelement 26 vorgegebenen ersten Schlüsselcode 34 programmiert, indem sie einfach der Reihe nach in das Schloß 11 eingeschoben und dort zum Betätigen des Schloßschalters 15 verdreht werden, während auch das Kontrollelement 26 sich in für die Hochfrequenzübertragung ausreichender räumlicher Nähe zur Schreib-Lese-Einheit 25 eben dieses Schlosses 11 befindet.

Der aktuell gültige der zwischen Schlüssel 13 und Kontrollelement 26 ausgetauschte Schlüsselcode 34 wird außerdem im Zuge dieser Paarung von der Schreib-Lese-Einheit 25 im Schloß-Speicher 29 abgelegt. Da hierbei der Schloß-Speicher 29 auch die objektspezifischen Identifikationsdaten 30 vom Kontrollelement 26 bestätigt bekommt, ist dadurch die zunächst neutrale Schreib-Lese-Einheit 25 über ihren Speicher 29 nun sowohl dem Kontrollelement 26 wie dem Objekt und den Schlüsseln 13 fest zugeordnet.

Das Kontrollelement 26 verfügt ferner über einen Identgeber 35, der bei erstmaligem Abruf eines Schlüsselcodes 34 zugleich seine Identnummer 36 über die Schreib-Lese-Einheit 25 an die Kontrollelektronik 18 übermittelt, um damit im Speicher 29 einen zur Erstinbetriebnahme vorgegebenen Einrichtungscode 31 einmal und endgültig durch diese Kontroll-Identnummer 36 zu überschreiben. Auch dadurch ist dieses individuelle Kontrollelement 26 der objetspezifischen Kontrollelektronik 18 fest zugeordnet, denn ein erneutes Überschreiben der entsprechenden Position im Speicher 29 - etwa zu späterer Anpassung dieser Kontrollelektronik 18 an ein anderes Kontrollelement 26 - ist schaltungstechnisch ausgeschlossen.

Da es sich bei jenen Zuordnungsgängen um drahtlose Übertragungen handelt, ist grundsätzlich nicht auszuschließen, daß ein Unbefugter mittels eins in die Nähe gebrachten eigenen Transponders den Datenverkehr abhört und sich so durch elektrisches Abspeichern des Codes z. B. eine elektronische Schlüsselimitation anfertigt. Damit er damit später nicht bei überbrücktem Schalter 15 unbefugt das Freigabesignal 19 der Kontrollelektronik 18 auslösen kann, erfolgt die Übertragung des Schlüsselcodes 34 (also der Kombination aus der aktuell gültigen Schlüsselnummer und den zuvor eingelernten objektspezifischen Identifikationsdaten 30) über einen nach jeder Schlüsselbetätigung wechselnden kryptographischen Code, der von einem Verschlüsseler 38 der Schreib-Lese-Einheit 25 jeweils speziell für den bevorstehenden Datentransfer an den externen Transponder 22, 27 im Schlüssel 13 bzw. im Kontrollelement 26 übermittelt wird, um die unmittelbar folgende Informationsübermittlung damit zu verschlüsseln. Selbst wenn also ein Unbefugter den aktuell hardwaremäßig generierten Code mithören könnte, würde es ihm nichts nutzen, da jeder Informationsaustausch über die Schreib-Lese-Einheit 25 erfolgt und von dieser für den nächsten Informationsaustausch eine neue Verschlüsselung vorgegeben wird.

Außerdem kann zusätzlich der Schlüsselcode 34 mit einem Quasi-Zufallscode 37 rolliert werden, wenn die Schlüssel 13 mit Schreib-Lese-Transpondern 22 und nichtflüchtigen Speichern 23 ausgestattet sind. Dafür generiert die Schreib-Lese-Einheit 25 bei der Zuordnung eines Schlüsselcodes 34 zusätzlich einen Zufallscode 37 (oder wenigstens einen Pseudo-Zufallscode 37), der ebenfalls über die Kontrollelektronik 18 im Speicher 29 abgelegt wird, wenn und solange dasselbe Kontrollelement 26 in hinreichender Nähe für den Datenaustausch an der Schreib-Lese-Einheit 25 des zugeordneten Schlosses 11 bereitgehalten bleibt.

Sobald nun der Besitzer eines so programmierten Schlüssels 13 im Schloß 11 über den Schloßschalter 15 (beispielsweise in der Zündschlüssel-Stellung "Radio" oder "Zündung") das Betriebssignal 10 aktiviert, wird von der Schreib-Lese-Einheit 25 des Schlosses 11 dieser Schlüssel 13 als autorisiert behandelt, wenn die Kontrollelektronik 18 aufgrund der Vorgaben im Schloß-Speicher 29 den Schlüsselcode 34 (und ggf. zusätzlich den diesem Satz von Schlüsseln 13 individuell zugeordneten Zufallscode 37) erkennt. Die Kontrollelektronik 18 liefert bei Übereinstimmung das Freigabesignal 19, so daß beispielsweise ein Motor gestartet oder eine elektromagnetische Türverriegelung aufgehoben werden kann.

Bei einem zwar hinsichtlich des Sperrwellenprofiles 14 mechanisch passenden aber hinsichtlich des Schlüsselcodes 34 ggf. des und aktuellen Zufallscodes 37 ungültigen Schlüssel 13 verhindert die Kontrollelektronik 18 das Generieren eines Freigabesignales 19, bzw. ein separates Sperrsignal 20 wird ausgelöst, um beispielsweise durch Signalgabe oder Signalspeicherung auf einen Manipulationsversuch hinzuweisen oder eine zusätzliche Sicherheitsverriegelung auszulösen.

Sollte ein Schlüssel 13 verlorengehen, dann wird vorsorglich der bisherige Schlüsselcode 34 im Schloß-Speicher 29 durch Abruf vom Kontrollelement 26 gelöscht. Der Fahrzeughalter kann dann wie bisher unter Vorlage von seine Berechtigung ausweisenden Unterlagen (wie etwa unmittelbar des objektspezifisch gekennzeichneten Kontrollelementes 26) einen Ersatzschlüsselsatz bestellen, der einen mechanisch auf das Schloß 11 passendes Sperrwellenprofil 14 aufweist. Falls nur ein Lese-Transponder 22 am Schlüssel 13 vorhanden ist, dann ist der wieder herstellerseitig mit einem Schlüsselcode 34 ausgestattet, die von der Schreib-Lese-Einheit 25 an deren Speicher 29 und in die nächste noch freie Registerstelle des gleichseitig erfaßten, objektspezifisch zugehörigen Kontrollelementes 26 übermittelt wird. Andernfalls stellt die Schreib-Lese-Einheit 25 fest, ob im Register 33 noch für künftige Schlüsselsätze eine bisher unbenutzte Schlüsselnummer verfügbar ist, markiert diese als nun verbraucht (oder löscht sie) und übermittelt die Schlüsselnummer (zum Schlüsselcode 34 kombiniert) an den Schloßspeicher 29 und an den als bisher unbeschrieben erkannten Schreib-Lese-Speicher 23 des aktuell zu programmierenden Ersatz-Schlüssels 13.

Eine solche Beschaffung von Ersatzschlüsseln kann so oft wiederholt werden, wie neue von schon programmierten Schlüsseln 13 abzurufende Codes 34 noch auf das Kontrollelement 26 abgespeichert werden können, bzw. bis die letzte der auf dem Kontrollelement 26 vorgegebenen Schlüsselnummern verbraucht ist. Danach muß, wie auch nach Verlust eines Kontrollelementes 26, ein neues Kontrollelement 26 mit wieder voll verfügbarem Register 33 über die Identitätsdaten 30 dem spezifischen Objekt zugeordnet werden. Da die Schreib-Lese-Einheit 25 früher schon einmal zur Übergabe von Schlüsselcodes 34 bei einem (anderen) Kontrollelement 26 eingesetzt worden war, wird beispielsweise der Identgeber 35 im (neuen) Kontrollelement 26 von der Schreib-Lese-Einheit 25 her dahingehend modifiziert, daß aus der Identnummer 36 nun erkennbar ist: Es handelt sich zwar um das einzige zulässige Kontrollelement 26 für dieses Schloß 11, aber nicht mehr um das ursprünglich zugeordnet gewesene Kontrollelement 26 - dessen Identnummer (alte) 36 wird dadurch unbrauchbar, so daß später kein Unbefugter einen Schlüssel 13 mit dem (beispielsweise gestohlenen oder gefundenen) ursprünglichen Kontrollelement 26 mehr codieren kann. Durch die objektspezifischen Identitätsdaten 30, die nur dem Hersteller des Objekts und seines Kontrollelementes 26 zugänglich sind, ist sichergestellt, daß nicht irgendein irgendwo greifbares Kontrollelement 26 zum Nachcodieren weiterer Schlüssel 13 herangezogen werden kann, sondern nur dasjenige Kontrollelement 26, in das der Hersteller bereits die objektspezifisch gültigen Identitätsdaten 30 aufgenommen hat; denn von einer einmal in Betrieb gewesenen Schreib-Lese-Einheit 25 können später keine objektspezifische Identitätsdaten 30 mehr an ein (anderes) Kontrollelement 26 übermittelt werden.

So wird auch durch bloßen Austausch des Kontrollelementes 26 ein einmal codiert gewesener Satz von Schlüsseln 13 endgültig unbrauchbar gemacht, denn aus Sicherheitsgründen kann der Inhalt von deren Speichern 23 nicht durch einen neuen Schlüsselcode 34 überschrieben werden.

Sollte die an oder in das Schloß 11 oder in dessen Nähe eingebaute Schreib-Lese-Einheit 25 aufgrund eines technischen Defektes unbrauchbar und deshalb ausgetauscht werden, dann wird von der neuen Schreib-Lese-Einheit 25 die Identnummer 36 des nahe bereitgehaltenen Kontrollelementes 26 in Kombination mit einem neuen Zufallscode 37 an die Kontrollelektronik 18 übermittelt und in den Speicher 29 eingeschrieben, sofern die aktuell vom Kontrollelement 26 ausgelesene Identnummer 36 mit der schon abgespeicherten übereinstimmt, also die objektspezifische Zuordnung des Kontrollelementes 26 weiterhin gegeben ist.

Wenn der Funktionsbereich, in den die Kontrollelektronik 18 einbezogen ist, (beispielsweise die Motormanagement-Elektronik) ausgetauscht werden muß, dann verfügt der damit auch ausgetauschte Objekt-Speicher 29 noch nicht über den zuletzt vergebenen Zufallscode 37 und auch nicht über die objektspezifischen Identdaten, so daß das Freigabesignal auch mit einem an sich zugeordneteten Schlüssel 13 nicht hervorgerufen werden kann. Im neuen Objekt-Speicher 29 ist dann aber noch der ursprüngliche, nun auf den Ersatzteil-Austausch verweisende Einrichtungscode 31 enthalten. Der wird bei erstmaliger Abfrage des Kontrollelementes 26 mit dessen Identnummer 36 überschrieben (was - wie oben ausgeführt - nur beim ersten Kommunikationskontakt des Kontrollelementes 26 nach dem Ersatzteil-Einbau möglich ist). Dank dieser Übertragung der Identnummer 36 generiert die Schreib-Lese-Einheit 25 automatisch einen neuen Zufallscode 39, der ebenfalls dem Objekt-Speicher 29 abgelegt wird. Außerdem wird die aktuell markierte Schlüsselnummer aus dem Schlüsselregister 33 zum Schlüsselcode 34 kombiniert in den neuen Objektspeicher 29 übergeben. Damit liegen nun dort wieder alle Information vor, um über die Kontrollelektronik 18 das Vorhandensein eines zulässigen Schlüssels 13 feststellen und danach das Freigabesignal 19 ausgeben zu können.

Sollte kein gültig codierter Schlüssel 13, nur ein mechanisch zu Schloß 11 passender, mehr verfügbar sein, dann kann als Notbetrieb auch damit das Freigabesignal 19 ausgelöst werden, wenn nur das dem Objekt zugeordnete Kontrollelement 26 im Auffaßbereich der Schloß-Antenne, also der Schreib-Lese-Einheit 25 ist. Deshalb ist das codierte Kontrollelement 26 normalerweise wie ein Kraftfahrzeugbrief oder eine Scheckkarte sorgfältig vor Fremdzugriff zu bewahren.

## Patentansprüche

1. Elektronisches Code-Schloß (11) mit drahtloser Informationsübertragung zwischen seiner Schreib-Lese-Einheit (25) mit Objekt-Speicher (29) und einem Schlüssel (13) mit Transponder (22) und Speicher (23), wobei für die Code-Zuordnung zwischen Schlüssel (13) und Schloß (11) ein Kontrollelement (26) vorgesehen ist,
**dadurch gekennzeichnet**,
daß - insbesondere zum Deaktivieren einer Kraftfahrzeug-Wegfahrsperre - in das Kontrollelement (26) bei erstmaliger Zuordnung zum Schloß (11) vom Objekt-Speicher (29) objektspezifische Identifikationsdaten (30) einspeicherbar sind.

2. Schloß nach Anspruch 1,
**dadurch gekennzeichnet**,
daß über die Schreib-Lese-Einheit (25) eine Schlüsselnummer aus einem Vorrat in einem Schlüsselregister (33) des Kontrollelementes (26) in Kombination mit dem Identifikationsdaten (30) auslesbar und als Schlüsselcode (34) in den Schlüssel-Speicher (23) übertragbar ist.

3. Schloß nach Anspruch 1 oder 2,
**dadurch gekennzeichnet**,
daß jede Informationsübertragung mit einer aktuell von der Schreib-Lese-Einheit (25) vorgegebenen kryptographischen Verschlüsselung erfolgt.

4. Schloß nach einem der vorangehenden Ansprüche,
**dadurch gekennzeichnet**,
daß die Schreib-Lese-Einheit (25) quasi-gleichzeitig mit dem Schlüssel-Transponder (22) und einem Kontrollelement-Transponder (27) korrespondiert, wenn eine abgespeicherte Information zu ändern ist.

5. Schloß nach einem der vorangehenden Ansprüche,
**dadurch gekennzeichnet**,
daß im Objekt-Speicher (29) ein Neueinrichtungs-Code (31) nur einmal von einer das Kontrollelement (26) individualisierenden Identnummer (36) überschreibbar ist.

6. Schloß nach einem der vorangehenden Ansprüche,
**dadurch gekennzeichnet**,
daß ein neues Kontrollelement (26) über die Schreib-Lese-Einheit (25) als das zwar nicht mehr originäre aber nun einzig zulässige Kontrollelement (26) individualisierbar ist, wenn seine extern vorgegebenen objektspezifischen Identitätsdaten (30) mit den im Objekt-Speicher (29) abgelegten Identitätsdaten (30) übereinstimmen.

7. Schloß nach einem der vorangehenden Ansprüche,
**dadurch gekennzeichnet**,
daß sein Kontrollelement (26) nach Art einer Scheckkarte mit nicht-überschreibbar eingespeicherten objektspezifischen Identitätsdaten (30) ausgelegt ist.

8. Schloß nach einem der vorangehenden Ansprüche,
**dadurch gekennzeichnet**,
daß die Übertragung eines Schlüsselcodes (34) vom Kontrollelement (26) zum Objekt-Speicher (29) und zum Schlüssel-Speicher (23) mit einem rollierenden Zufallscode (37) verknüpft ist.

9. Schloß nach Anspruch 1,
**dadurch gekennzeichnet**,
daß die einzelnen Schlüsselcodes (34) aus Schlüsseln (13) mit Nur-Lese-Speichern (23) über die Schreib-Lese-Einheit (25) in Gegenwart des Kontrollelements (26) in den Schloß-Speicher übertragbar sind.
